# FASCICULE DE BREVET EUROPEEN

(11) **EP 0 849 829 B1**
(45) Date de publication et mention de la délivrance du brevet: **05.06.2002**
(21) Numéro de dépôt: 97403071.0
(22) Date de dépôt: 17.12.1997
(51) Int. Cl.: H01R 13/24, H01R 25/16, H01R 4/24

(54) **Canalisation de distribution électrique à bus de transmission**
Elektrische Kabelrinne mit einem Datenübertragungsbus
Electrical distribution duct with transmission bus

(30) Priorité: 17.12.1996 FR 9615623
(43) Date de publication de la demande: 24.06.1998
(73) Titulaire: Schneider Electric Industries SA, 92500 Rueil-Malmaison (FR)
(72) Inventeur: Carron, Jean-Claude, 21000 Dijon (FR); Jego, Gérard, 21470 Brazey En Plaine (FR); Thierry, Jean-Pierre, 21560 Arc-Sur-Tille (FR)

(56) Documents cités:
- EP-A- 0 670 197
- FR-A- 2 717 634
- US-A- 5 064 380
- US-A- 5 306 177

## Description

La présente invention concerne une canalisation de distribution électrique comprenant dans une enveloppe des conducteurs électriques de distribution de puissance et un bus électrique bifilaire de transmission de signaux de communication et/ou de contrôle, ci-après qualifiés aussi de signaux bas niveau.

Une telle canalisation comporte généralement des supports de dérivation disposés à intervalles réguliers le long de l'enveloppe dans celle-ci et en regard d'ouvertures appropriées pour permettre chacun le raccordement d'un connecteur de puissance et de contrôle ; ce connecteur est lui-même relié à un appareil électrique de puissance tel qu'une charge qui doit être alimentée à partir des conducteurs de puissance et avec laquelle on souhaite échanger des signaux bas niveau.

Une canalisation de ce type est décrite dans le document EP- 673 089 ; elle comprend, au niveau de chaque support de dérivation, deux pièces de connexion de bus associées au support et respectivement au connecteur et couplées mécaniquement et électriquement entre elles afin d'assurer la liaison de communication et/ou de contrôle entre le bus et la charge reliée au connecteur.

US-A-5 064 380 décrit une canalisation selon le préambule de la revendication 1.

Il apparaît que la robustesse et la qualité de contact, dans l'environnement contraignant de la canalisation de puissance, sont des qualités essentielles requises pour la connexion d'un bus notamment bifilaire torsadé ou non torsadé.

L'invention a pour but d'améliorer la qualité et la fiabilité de connexion du bus de transmission des signaux bas niveau à l'endroit des supports de dérivation d'une canalisation du type décrit.

Selon l'invention, la pièce de connexion associée au support - ou au connecteur - présente pour se connecter à chaque fil du bus deux branches élastiques de contact logées dans un corps isolant, tandis que la pièce de connexion associée au connecteur - ou au support - présente une plage de contact rigide sur laquelle s'appliquent les zones de contact, en saillie hors du corps isolant, des deux branches élastiques.

De préférence, la pièce de connexion associée au support comprend des pièces conductrices pliées, dotées chacune à une extrémité d'au moins une fourche de contact à déplacement d'isolant apte à s'engager sur un fil du bus et à une autre extrémité d'une jambe repliée sur elle-même pour former les branches élastiques à zones de contact, ces zones étant décalées à la fois parallèlement à la longueur de la canalisation et perpendiculairement à cette longueur.

La pièce de connexion associée au connecteur peut s'engager dans un puits spécifique du support et présenter, pour chaque conducteur à connecter, une branche métallique de connexion qui s'étend selon la direction d'introduction du connecteur, tandis qu'une barrette isolante surmoule les branches de connexion, cette barrette étant dotée d'une faible épaisseur dans une direction perpendiculaire à la fois à la longueur de la canalisation et à la direction d'introduction.

La description qui est faite ci-après d'un exemple de réalisation non limitatif, en regard des dessins annexés, explicite les avantages et résultats obtenus par la mise en oeuvre de l'invention.

La figure 1 représente en perspective schématique une canalisation électrique conforme à l'invention.

La figure 2 montre en perspective avec éclatement partiel de la pièce de connexion associée au support et de la pièce de connexion associée au connecteur de dérivation dans la canalisation de la figure 1.

La figure 3 est une vue en perspective éclatée de la pièce de connexion associée au support de dérivation.

La figure 4 montre en perspective l'organe de connexion associé au connecteur.

La figure 5 représente le flan utilisé pour réaliser la partie conductrice de l'organe de connexion illustré figure 4.

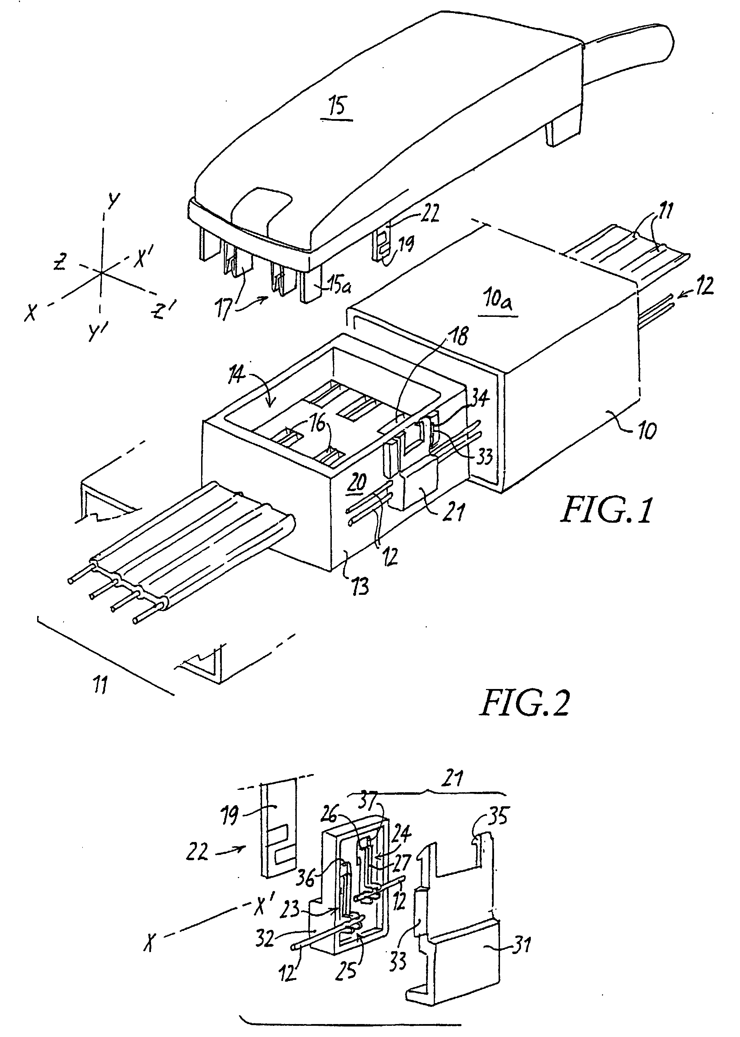

La canalisation électrique de distribution représentée sur la figure 1 comprend une enveloppe métallique profilée 10, par exemple extrudée, logeant des conducteurs parallèles, à savoir des conducteurs électriques de puissance 11, unitaires ou sous forme de nappe ou éventuellement de barres, et des conducteurs 12 de transmission de signaux bas niveau de données, de contrôle ou de commande ; les conducteurs 12 sont ici réalisés sous forme de bus bifilaire, torsadé ou non torsadé.

La canalisation s'étend selon une direction longitudinale X-X' et comprend à intervalles réguliers des supports fixes de dérivation 13 en matière isolante ; ces supports sont logés dans l'enveloppe de manière à présenter chacun vers une ouverture 14 ménagée dans une face longitudinale 10a de l'enveloppe des puits 16,18 d'introduction selon une direction Y-Y' perpendiculaire à X-X' des fiches de connexion propres à un connecteur de dérivation 15. Il est prévu des puits 16 pour recevoir des fiches de connexion de puissance 17 du connecteur et un puits 18 pour recevoir une patte 19 formant une pièce de connexion de signaux 22, les fiches et la patte étant orientées selon Y-Y'.

Sur une face latérale 20 du support est fixée par emboîtement et/ou encliquetage une pièce de connexion 21 elle-même rapportée sur les fils 12 de façon à être connectée à ceux-ci par des moyens de déplacement ou percement d'isolant. La patte 19 formant la pièce 22 est prévue en saillie selon Y-Y' sous le corps du connecteur 15.

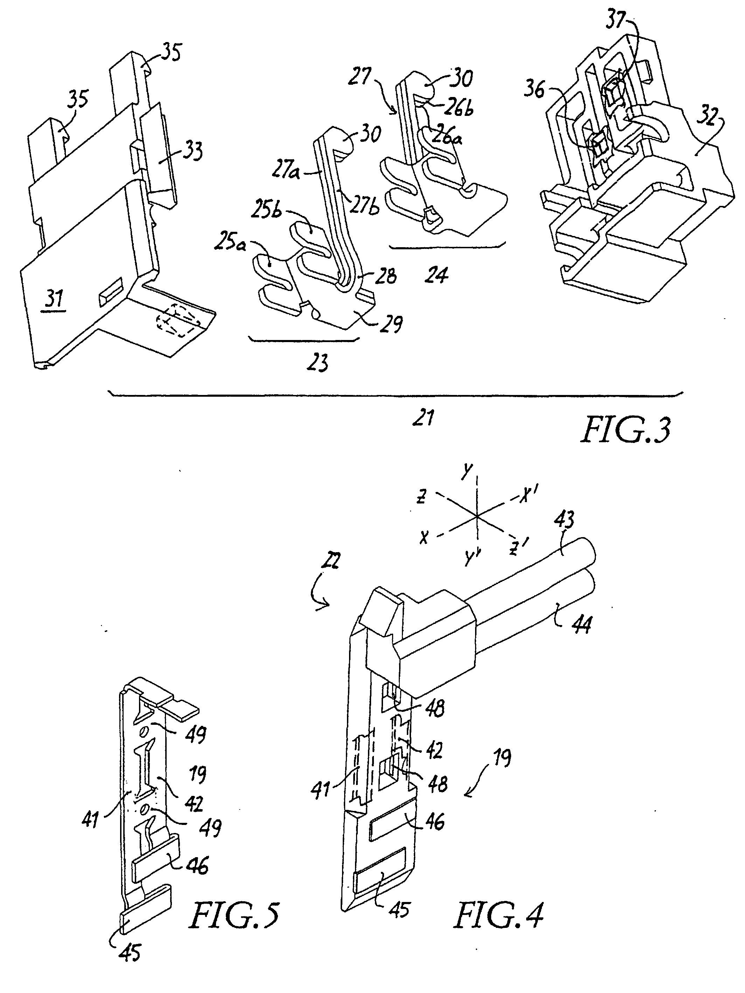

Comme on le voit mieux sur les figures 2 et 3, la pièce de connexion 21 associée au support comporte deux pièces conductrices 23,24 formées chacune à partir d'un flan métallique par découpe et pliage ; chaque pièce 23,24 présente à une extrémité deux fourches 25a,25b à dégagement d'isolant au fond desquelles se loge un fil 12 et à une autre extrémité deux zones de contact 26a,26b situées en bout de branches élastiques respectives 27a,27b. Les branches 27a,27b sont obtenues par pliage sur elle-même d'une jambe 28 prenant racine sur une plage 29 de la pièce conductrice et sont accolées par leurs faces principales. Les zones de contact 26 sont formées par des parties proéminentes 30 prévues aux extrémités des branches 27 et leurs points de contact sont situés sur les tranches de ces parties proéminentes.

Les pièces conductrices sont symétriques par rapport à un plan perpendiculaire à X-X'. Elles sont maintenues entre deux parties isolantes 31,32 assemblées mutuellement pour constituer le corps de la pièce de connexion. La partie 31 présente des formes 33 de guidage et de retenue dans des formes complémentaires 34 de la paroi latérale 20 du support et des éléments 35 d'encliquetage sur le support. La partie 32 comprend des fenêtres 36,37 de passage pour les extrémités des branches 27 et leurs parties proéminentes 30, qui par ailleurs traversent une ouverture de la paroi larérale 20 pour faire saillie dans le puits 18. Il convient de noter que les fenêtres 36,37 sont mutuellement décalées d'une part selon la direction longitudinale X-X', d'autre part selon la direction d'introduction du connecteur Y-Y'.

La pièce de connexion 22 associée au connecteur présente deux branches de connexion 41,42 réalisées par pliage et découpe d'une lamelle métallique 40 (figure 5).

Les branches 41,42 sont reliées à une extrémité aux conducteurs 43,44 de dérivation du connecteur raccordés à la charge et portent à l'autre extrémité des pistes respectives 45,46 obtenues par pliage de la lamelle de manière à être orientées selon X-X' et agencées pour coopérer chacune avec les deux zones de contact 26a,26b d'une pièce conductrice 23,24. La longueur des pistes 45,46 est adaptée à l'amplitude du déplacement selon X-X' du connecteur lorsque le verrouillage de celui-ci requiert un tel mouvement. La lamelle 40 est surmoulée par une barrette isolante 47, de faible épaisseur dans une direction Z-Z' perpendiculaire à X-X' et Y-Y', de manière à occuper une place minimale dans le connecteur ; puis la barrette est poinçonnée en 48 pour couper les liens 49 initialement prévus entre les branches 41,42.

Lorsque le connecteur 15 est introduit dans l'ouverture 14 de l'enveloppe de la canalisation selon la direction Y-Y', il est guidé par des pattes 15a orientées selon Y-Y' dans des fentes non indiquées du support 13 ; les fiches de puissance 17, orientées selon la même direction, s'engagent dans les puits 16 et la patte 19 s'engage dans le puits 18. Quand les pistes conductrices 45,46 parviennent dans le puits 18 au niveau des parties proéminentes 30 des branches 27, dont les deux zones de contact 26a,26b sont en saillie vers l'intérieur du puits, elles s'appliquent sur ces zones de contact en les repoussant selon Z-Z' grâce à la flexion des branches 27. On constate alors que la connexion réalisée est de bonne qualité et qu'elle est fiable.

## Revendications

1. Canalisation de distribution électrique comprenant un connecteur de puissance et de contrôle (15) et dans une enveloppe (10) des conducteurs électriques de distribution de puissance (11) et un bus électrique (12) de transmission de signaux de communication ou de contrôle, des supports de dérivation (13) étant disposés à intervalles réguliers le long de la canalisation dans celle-ci et en regard d'ouvertures (14) appropriées ménagées dans l'enveloppe pour permettre chacun le raccordement d'un tel connecteur de puissance et de contrôle (15) pour des conducteurs reliés à une charge, deux pièces de connexion de bus (21,22) associées au support et respectivement au connecteur étant couplables mécaniquement et électriquement afin d'assurer la transmission des signaux entre le bus et la charge,
**caractérisée par le fait qu'**une première pièce de connexion (21) présente pour se connecter à chaque fil du bus (12) une paire de branches élastiques de contact (27a,27b) par fil logées dans un corps isolant (31,32), tandis que la deuxième pièce de connexion (22) présente des plages de contact rigides (45,46) sur chacune desquelles s'appliquent les deux zones de contact (26a,26b), en saillie hors du corps isolant, d'une paire de branches élastiques.

2. Canalisation selon la revendication 1, **caractérisée par le fait que** la première pièce de connexion (21) comprend des pièces conductrices (23,24) disposées dans le corps isolant, en étant décalées à la fois parallèlement à la longueur de la canalisation et perpendiculairement à cette longueur.

3. Canalisation selon la revendication 1, **caractérisée par le fait que** la première pièce de connexion (21) comprend des pièces conductrices (23,24) pliées à partir d'un flan et dotées à une extrémité d'une fourche (25) de déplacement d'isolant apte à s'engager sur un fil du bus (12) et à une autre extrémité d'une jambe (28) repliée pour former les deux branches élastiques de contact (27a,27b).

4. Canalisation selon la revendication 3, **caractérisée par le fait que** les branches élastiques (27a,27b) sont pliées l'une sur l'autre par leur face principale, leurs zones de contact (26a,26b) étant situées à leurs extrémités libres en saillie hors du corps (31,32) et sur leurs tranches.

5. Canalisation selon la revendication 1, **caractérisée par le fait que** la deuxième pièce de connexion (22) présente d'une part des branches métalliques de connexion (41,42) qui s'étendent selon une direction d'introduction (Y-Y') perpendiculaire à la longueur de la canalisation et d'autre part une barrette isolante (47) surmoulant les branches de connexion et dotée d'une faible épaisseur dans une direction Z-Z' perpendiculaire à la longueur (X-X') de la canalisation et à la direction d'introduction (Y-Y').

6. Canalisation selon la revendication 1, **caractérisée par le fait que** la première pièce de connexion (21) est encliquetée sur une face latérale (20) du support (13) par engagement sur celle-ci parallèlement à la direction (Y-Y') d'introduction du connecteur (15) dans le support, les zones de contact (26a,26b) des branches élastiques (27a,27b) faisant saillie à travers une ouverture d'une paroi latérale 20 du support dans un puits (18) du support pour guider la deuxième pièce de connexion (22).

## Patentansprüche

1. Elektrische Verteilerleitung, umfassend einen Leistungs- und Überwachungssteckverbinder (15) und in einer Umhüllung (10) elektrische Leistungsverteilerleiter (11) und einen elektrischen Bus (12) zum Übertragen von Kommunikations- oder Überwachungssignalen, wobei Abzweigungsstützpunkte (13) in regelmäßigen Abständen entlang der Leitung darin und gegenüber von geeigneten Öffnungen, die in der Umhüllung vorgesehen sind, angeordnet sind, um jeweils den Anschluss eines solchen Leistungs- und Überwachungssteckverbinders (15) zu ermöglichen für Leiter, die an eine Last angeschlossen sind, wobei zwei Busverbindungsstücke (21, 22), die mit dem Stützpunkt und jeweils dem Steckverbinder verknüpft sind, mechanisch und elektrisch gekoppelt werden können, um die Signalübertragung zwischen Bus und Last sicherzustellen, **dadurch gekennzeichnet, dass** ein erstes Verbindungsstück (21) zum Verbinden mit jedem Busdraht (12) ein Paar elastische Kontaktzweige (27a, 27b) pro Draht aufweist, die in einem Isolierkörper (31, 32) aufgenommen sind, während das zweite Verbindungsstück (22) starre Kontaktlaschen (45, 46) aufweist, an denen jeweils die beiden aus dem Isolierkörper herausragenden Kontaktflächen (26a, 26b) eines Paars elastischer Zweige anliegen.

2. Leitung nach Anspruch 1, **dadurch gekennzeichnet, dass** das erste Verbindungsstück (21) leitfähige Stücke (23, 24) umfasst, die in dem Isolierkörper angeordnet sind, wobei sie gleichzeitig parallel zur Länge der Leitung und rechtwinklig zu dieser Länge verschoben sind.

3. Leitung nach Anspruch 1, **dadurch gekennzeichnet, dass** das erste Verbindungsstück (21) leitfähige Stücke (23, 24) umfasst, die von einem Plättchen ausgehend gebogen werden und an einem Ende mit einer Isolierstoffverschiebungsgabel (25), die dazu geeignet ist, in einen Draht des Busses (12) einzugreifen, und an einem anderen Ende mit einem Schenkel (28), der umgebogen ist, um die beiden elastischen Kontaktzweige (27a, 27b) zu bilden, versehen sind.

4. Leitung nach Anspruch 3, **dadurch gekennzeichnet, dass** die elastischen Zweige (27a, 27b) an ihrer Hauptseite aufeinander gebogen sind, wobei sich ihre Kontaktflächen (26a, 26b) an ihren freien Enden aus dem Körper (31, 32) herausragend und auf ihren Schnittflächen befinden.

5. Leitung nach Anspruch 1, **dadurch gekennzeichnet, dass** das zweite Verbindungsstück (22) einerseits Metallverbindungszweige (41, 42), die sich in einer Einführrichtung (Y-Y') rechtwinklig zur Länge der Leitung erstrecken, und andererseits eine Isolierschiene (47), welche die Verbindungszweige umformt und in einer Richtung Z-Z' rechtwinklig zur Länge (X-X') der Leitung und der Einführrichtung (Y-Y') dünn ist, aufweist.

6. Leitung nach Anspruch 1, **dadurch gekennzeichnet, dass** das erste Verbindungsstück (21) in eine Seitenfläche (20) des Stützpunkts (13) durch Eingreifen darin parallel zu der Einführrichtung (Y-Y') des Steckverbinders (15) in den Stützpunkt einrastet, wobei die Kontaktflächen (26a, 26b) der elastischen Zweige (27a, 27b) durch eine Öffnung einer Seitenwand 20 des Stützpunktes in einen Schacht (18) des Stützpunktes hereinragen, um das zweite Verbindungsstück (22) zu führen.

## Claims

1. Electrical distribution duct, containing electrical power distribution conductors and an electrical communication or instrumentation signal transmission bus (12) within a single casing, the branch connection supports (13) being placed at regular intervals along and inside the duct and facing appropriate openings so that each enables connection of a power and control connector (15) for conductors connected to a load, two bus connection parts (21, 22) associated with the support and the connector respectively, being mechanically and electrically coupled to enable transmission of signals between the bus and the load,
**characterized by** the fact that a first connection part (21) has two elastic contact arms (27a, 27b) built into an insulating body (31, 32) to connect to each wire in the bus (12), whereas the second connection part (22) has rigid contact areas (45, 46), each of which comes into contact with two contact areas (26a, 26b), that project outside the insulating body of the two elastic arms.

2. Duct according to claim 1, **characterized in that** the first connection part (21) includes conducting parts (23, 24) placed in an insulating body, and being offset both parallel and perpendicular to the center line of the duct.

3. Duct according to claim 1, **characterized by** the fact that the first connection duct (21) comprises conducting parts (23, 24) folded starting from a flat and fitted at one end with an insulation displacement fork (25) that fits onto one of the bus wires (12), and a leg (28) folded back on itself at the end to form the two elastic contact arms (27a, 27b).

4. Duct according to claim 3, **characterized by** the fact that the elastic arms (27a, 27b) are folded over each other on their main surface, their contact areas (26a, 26b) being located at their free ends projecting outside the body (31, 32) and their edges.

5. Duct according to claim 1, **characterized by** the fact that the second connection part (22) includes firstly metal connection arms (41, 42) which extend along an insertion direction (Y-Y') perpendicular to the length of the duct, and secondly an insulating strip (47) insert molded on the connection arms and not as thick along the Z-Z' direction perpendicular to the length (X-X') of the duct and the insertion direction (Y-Y').

6. Duct according to claim 1, **characterized by** the fact that the first connection part (21) click fits on a side face (20) of support (13) by fitting onto it parallel to the direction (Y-Y') in which the connector (15) is inserted in the support, the contact areas (26a, 26b) of elastic arms (27a, 27b) projecting through an opening in the support sidewall (20) in a support slot (18) to guide the second connection part (22).
